# EUROPEAN PATENT SPECIFICATION

(11) **EP 2 020 390 B1**
(45) Date of publication and mention of the grant of the patent: **12.12.2012**
(21) Application number: 08013562.7
(22) Date of filing: 28.07.2008
(51) Int. Cl.: B65G 51/03

(54) **Bottle conveying apparatus and bottle conveying method**
Flaschenfördervorrichtung und Flaschenförderverfahren
Appareil de transport de bouteille et procédé de transport de bouteille

(30) Priority: 31.07.2007 JP 2007199205
(43) Date of publication of application: 04.02.2009
(73) Proprietor: Suntory Holdings Limited, Kita-ku, Osaka-shi Osaka 530-8203 (JP)
(72) Inventor: Kobayashi, Toshiya, Yokohama-shi Kanagawa 225-0001 (JP); Iizuka, Toshiaki, Tokyo 108-0075 (JP); Shimazaki, Noriyuki, Fujisawa-shi Kanagawa 252-0802 (JP)
(74) Representative: Vossius & Partner

(56) References cited:
- WO-A-03/011724
- FR-A- 2 531 048
- FR-A- 2 767 517
- FR-A- 2 780 713
- JP-A- 2006 082 964
- US-A- 4 502 215
- US-A- 5 820 306

## Description

The present invention relates to a bottle conveying apparatus according to the preamble of claim 1 and a bottle conveying method according to the preamble of claim 4, and more particularly to a bottle conveying apparatus and a bottle conveying method for conveying empty bottle containers as before they are filled up with a quantity of beverage or the like. Such a bottle conveying apparatus and method is discosed in WO 03/011724 A.

It has been conventionally required in a production line of a beverage and the like that empty bottles (for example, plastic bottles) should be conveyed to a beverage filling station. There are a number of different apparatuses for conveying bottles, including one of common type as shown in Fig. 6 (see Patent Document 1). Specifically, a pair of conveying rails 121 is arranged along a conveying path and disposed in both sides relative to the bottle B, such that the bottle B with a flange G defined in a neck N thereof placed on the rails 121 can be conveyed, as the flange G of the bottle B sliding on the rails 121.

A power used to convey the bottle B is an aerodynamic force. That is, a blow of air is directed to impinge on the bottle toward the conveying direction. There are many different techniques to use the blow of air to impinge on the bottle B, including one, by way of example, that has employed two rows of air injection ports 107 arranged serially in both lateral sides relative to the conveying path along respective conveying rails 121 so as to allow the blow of air directed toward the conveying direction to impinge upon the neck N of the bottle B.
PATENT DOCUMENT: Japanese Patent Laid-open Publication No. 2006-82964 (see, specifically Fig. 1)

It should be noted, in the apparatus in accordance with the related art, the air injection ports 107 are located away from the neck N of the bottle B by a significant distance laterally in both sides relative to the bottle B. This arrangement is intended to accommodate a bottle having a differently configured (sized) neck to be conveyed as well without any modification applied to the apparatus. However, if the air injection ports 107 are distant from the neck N of the bottle B, a pressure of the blowing air could be reduced around a laterally middle zone of the conveying path and consequently fail to apply a force for conveyance provided by the original air to the neck N efficiently.

This could further cause the following difficulties. That is, owing to the reduced force for conveyance applied to the neck, in such a case where a plurality of bottles is conveyed proximally to each other, only a rearmost one in a train of the bottles is subject to a relatively large conveying force. To explain this in more detail, the aerodynamic conveying force can apply to the rearmost bottle sufficiently to urge the bottle toward the conveying direction. This is because the blow of air can impinge on the rearmost bottle also from rear surface thereof. On the other hand, those being conveyed ahead of the rearmost bottle are only subject to the blowing air having a lower pressure from lateral sides but not by the blowing air from right behind of the bottles. Consequently, the conveying speed for the bottles being conveyed ahead may decrease as compared to the rearmost bottle. This may result in a situation that the bottles being conveyed behind join into those being conveyed ahead, one after another, to thereby form a pileup, and as the number of bottles in the pileup increases, the conveying speed decreases and possibly the bottles could be stopped therein. In order to avoid that, the air having much higher pressure should be blown out of the air injection ports 107.

However, the high pressure air blown out of the air injection port 107 could cause the following difficulties. That is, in such an apparatus that allows the bottle B to be conveyed along the conveying rails 121 with the aid of the aerodynamic force, the bottle B may get stuck on the conveying rails 121 possibly due to any attitude change of the bottle B during its being conveyed. In such an event and if using the high pressure air, the bottle that has been previously subject to a significant force and now gets out of the stuck should be urged at a higher speed for conveyance than that applied to the bottles being conveyed ahead. Accordingly, this bottle being conveyed behind may crash into the bottle being conveyed ahead with a great speed difference therebetween, which may lead to the damaged bottle(s), such as the deformed or white-crazed bottle(s).

Accordingly, an object of the present invention is to provide a bottle conveying apparatus and a bottle conveying method that can resolve the difficulties as stated above. MEANS TO SOLVE THE PROBLEM

In the light of the situation as stated above, the inventors of the present invention have made their enthusiastic efforts and studies intended to efficiently impart the force for conveyance that a blow of air possesses to the neck of the bottle, and ultimately found that the decrease in the bottle conveying speed can be mitigated even in the condition where a plurality of bottles is conveyed in a train by blowing the air out of the air injection ports located in proximity to the necks of the bottles.

That is, the present invention is intended to provide a bottle conveying apparatus as stated in claim 1.

The present invention is further intended to provide a bottle conveying method as stated in claim 4. Preferably and/or additionally, a bottle conveying apparatus of the present invention comprises a pair of conveying rails (21) extending from both sides relative to a bottle B proximally to each other for carrying the bottle B at a flange G defined in a neck N of the bottle B, and at least one row of air injection ports (7) arranged serially along the conveying rail (21) and operable to blow a volume of air toward a conveying direction D of the bottle B, wherein the air injection ports (7) are disposed in proximity to the neck N of the bottle B.

According to the present invention, in comparison to the apparatus of the related art, a large part of a force for conveying the bottle that the air blown out of the air injection port possesses can be consumed to push against the neck of the bottle, allowing the aerodynamic force applied to the respective bottles being conveyed in a train to be more uniform. Consequently, this can mitigate the decrease in the bottle conveying speed in such a case where a plurality of bottles is conveyed as they are proximal to each other, which has been a difficulty in conjunction with the related art technique. In addition, for the rearmost bottle subject to a relatively significant conveying force, even in the event that such a bottle gets stuck on the conveying rails, the bottle that once got stuck on the rail and now can start to move again should be able to bump against a bottle being conveyed ahead of it with a little speed difference therebetween and thus the bottle(s) should tend not to get damaged easily.
Fig. 1 depicts a bottle conveying apparatus according to an embodiment of the present invention, wherein Fig. 1(A) shows a sectional view of the apparatus taken along the A-A line of Fig. 1(B), and Fig. 1(B) shows a front view of the apparatus;
Fig. 2 is a schematic view for illustrating a distance between respective air injection ports and a mouth in a bottle conveying apparatus as disclosed in Fig. 1;
Fig. 3 is a schematic view showing a dynamical pressure distribution in an air transport channel for illustrating an operation of the present invention, wherein
Fig. 3(A) shows a bottle conveying apparatus of the present invention and Fig. 3(B) shows a bottle conveying apparatus of the related art;

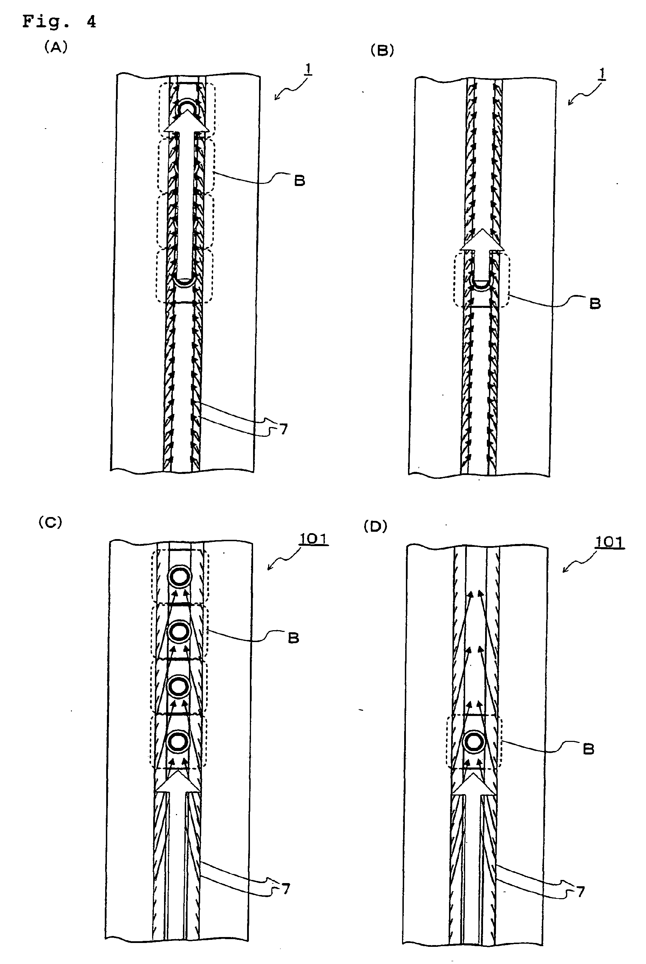

Fig. 4 provides schematic views showing an aerodynamic force to illustrate an operation by the present invention, wherein Fig. 4(A) represents a case where a plurality of bottles is conveyed by a bottle conveying apparatus of the present invention; Fig. 4(B) represents a case where a single bottle is conveyed by a bottle conveying apparatus of the present invention, Fig. 4(C) represents a case where a plurality of bottles is conveyed by a bottle conveying apparatus of the related art, and Fig. 4(D) represents a case where a single bottle is conveyed by a bottle conveying apparatus of the related art, respectively;
Fig. 5 is a schematic diagram showing a conveying force distribution to illustrate a bottle conveying force by an aerodynamic force at respective levels in the vertical direction; and

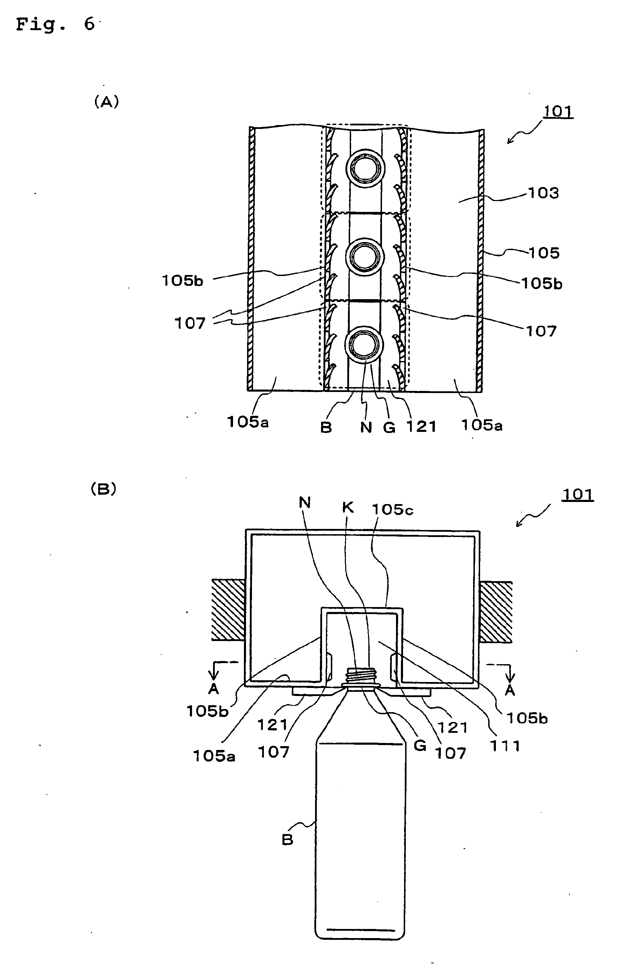

Fig. 6 represents a bottle conveying apparatus of the related art, wherein Fig. 6(A) shows a sectional view of the apparatus taken along the A-A line of Fig. 6(B) and Fig. 6(B) is a front view of the apparatus.

An embodiment of the present invention will now be described with reference to the attached drawings. Overview

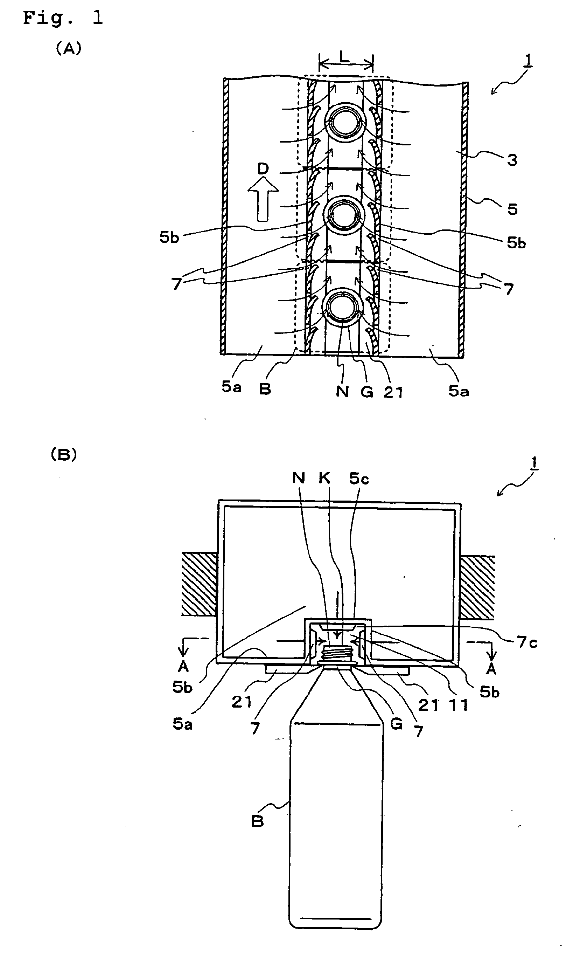

Fig. 1 shows a bottle conveying apparatus 1 according to an embodiment of the present invention, wherein Fig. 1(A) shows a sectional view of the bottle conveying apparatus 1 taken along the A-A line of Fig. 1(B) as viewed from above, and Fig. 1(B) shows a front view of the apparatus. A bottle B is shown to be conveyed in the upward direction in Fig. 1(A), while the bottle is shown to be conveyed further into the direction of a drawing sheet in Fig. 1(B). The bottle conveying apparatus 1 comprises an air-filled chamber 3 defining entirely a hollow cavity enclosed by a housing 5, an air transport channel 11 comprising a concave section formed in the housing 5 and a pair of conveying rails 21 placed horizontally in a lower end of the air transport channel 11. In addition, each single row of air injection ports 7, 7c is formed in each one of a left and a right side walls 5b and a top ceiling 5c, which are together defining the concave section, for the purpose of blowing a volume of air toward the air transport channel 11. Air-filled chamber

The air-filled chamber 3 is a chamber of hollow cavity for an air reservoir enclosed by the housing 5 and this air-filled chamber 3 extends along a conveying direction D of the bottle B. The housing 5 is made of metal sheet material that has been formed by bending such that a closed space is defined therein. It is to be noted that a method of producing the housing 5 would not characterize the present invention, and it may be formed by other processes, such as the extrusion, in addition to the bending.

Further, the concave section is defined in a bottom wall 5a of the housing 5 by two side walls 5b defined in the bottom wall region 5a and a top ceiling 5c interconnecting upper ends of respective side walls 5b, and this concave section provides an air transport channel 11 which will be described below. In addition, a series of air injection ports 7, 7c is formed in each one of the two side walls 5b and the top ceiling 5c along the conveying direction D of the bottle B. Those air injection ports 7, 7c are open toward the conveying direction (the upward direction in Fig, 1(A)) D of the bottle B. Specifically, respective side walls 5b and the top ceiling 5c are formed to open in a louver fashion, so that when the air flows through the air injection ports 7, 7c, the blow of air is directed toward the conveying direction D of the bottle B.

In addition, an air supply means (not shown), e.g. a blower, may be connected to the air-filled chamber 3. The air is supplied to the air-filled chamber 3 from the air supply means so as to control the air-filled chamber 3 to be held at a predetermined pressure. Air transport channel

The air transport channel 11 will now be described. As noted above, the air transport channel 11 is provided as the concave section of the housing 5 defined by the side walls 5b and the top ceiling 5c arranged in the bottom wall 5a of the housing 5. In this design, a volume of the air inside the air-filled chamber 3 can flow out of the air injection ports 7, 7c into the air transport channel 11 so as for this volume of air to be moved at a high speed toward the conveying direction D of the bottle B. The volume of thus moving air impinges on a neck N of the bottle B, and then a part of the volume of air goes through a space between the conveying rails 21 to impinge on an area below the neck N of the bottle B. In this way, the air impinging on the bottle B urges the bottle B to be conveyed in the conveying direction D. It is to be noted that the term "neck" as used in the illustrated embodiment means an upper portion of the bottle B that includes a flange G (including a mouth K).

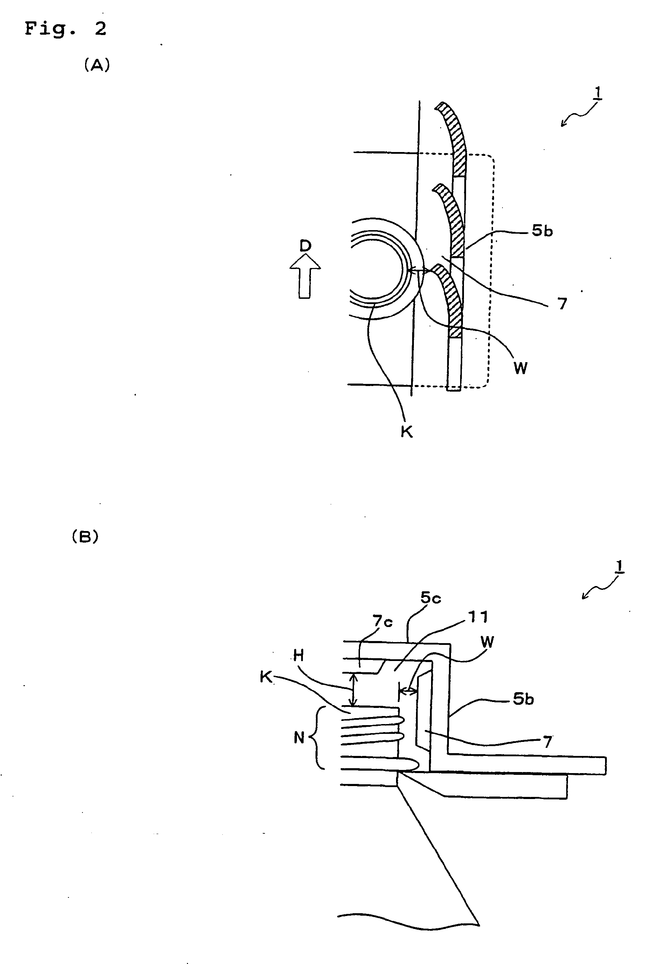

In this connection, the air transport channel 11 of the present invention is characterized as follows. That is, in a conventional manner, the air injection ports 7 are arranged at locations away from the neck N of the bottle B by some distance. This is intended to accommodate many differently configured (sized) bottles to be conveyed without any modification applied to the apparatus. Contrary, in the illustrated embodiment, the air injection ports 7, 7c are disposed adjacent to the neck N of the bottle B. This is a point that makes the apparatus of the present invention significantly different from the bottle conveying apparatus 101 of the related art. To explain this in detail, preferably, a distance W between the air injection port 7 and an outer perimeter of a mouth K of the bottle B measured along the direction orthogonal to the conveying direction D should be greater than 0 mm but not exceeding 15 mm, as shown in Fig. 2(A) and Fig. 2(B). The outer perimeter of the mouth K, as used herein, means the outer perimeter of a cylindrical segment defining non-threaded portion. The distance W in this embodiment means a distance between the outer perimeter of the mouth K and the air injection port 7 as measured when the mouth K of the bottle B is positioned right beside a certain air injection port 7.

Further, in the illustrated embodiment, the air injection port 7c is also formed in the top ceiling 5c, which is one of the members constructing the air transport channel 11. This is arranged from the reason that the bottle B can be conveyed more efficiently by blowing the air not only from the side walls 5b but also from the top ceiling 5c side. In this connection, preferably, a distance H from an upper end (tip end) of the mouth K of the bottle B to the air injection port 7c arranged in the top ceiling 5c is greater than 0 mm but not exceeding 15 mm.

It is to be understood that a series of the air injection ports 7 may be only arranged in two rows, each one row in each side relative to the neck N of the bottle B, or may be only arranged in one row in the top ceiling 5c, depending on the case. Conveying rail

The conveying rails 21 will now be described. The conveying rails 21 are provided as a pair of rails on the bottom wall 5a of the air transport channel 11 and comprise two plate-like rail members disposed oppositely with a predetermined gap therebetween. As such, the conveying rails 21 extend continuously along the conveying direction D of the bottle B. A distance of the gap between respective conveying rails 21 is greater than a diameter of the mouth K but smaller than a diameter of the flange G arranged in the neck N of the bottle B to be conveyed. This allows the flange G to be placed on the conveying rails 21 and accordingly the bottle B to be supported on the conveying rails 21.

The conveying rail 21 has a reduced thickness at an end thereof facing to the bottle B in order to reduce friction with the neck N of the bottle B. This is because the reduced contact area with the bottle B can proportionally reduce the friction with the bottle B. Many different material of the conveying rail 21 may be contemplated, and one made of resin having a lower friction coefficient or one made of metal with a resin having a lower friction coefficient coated thereon may be used as well. This is intended to facilitate the conveying of the bottle B by reducing the friction between the flange G of the bottle B and the conveying rails 21. Operation

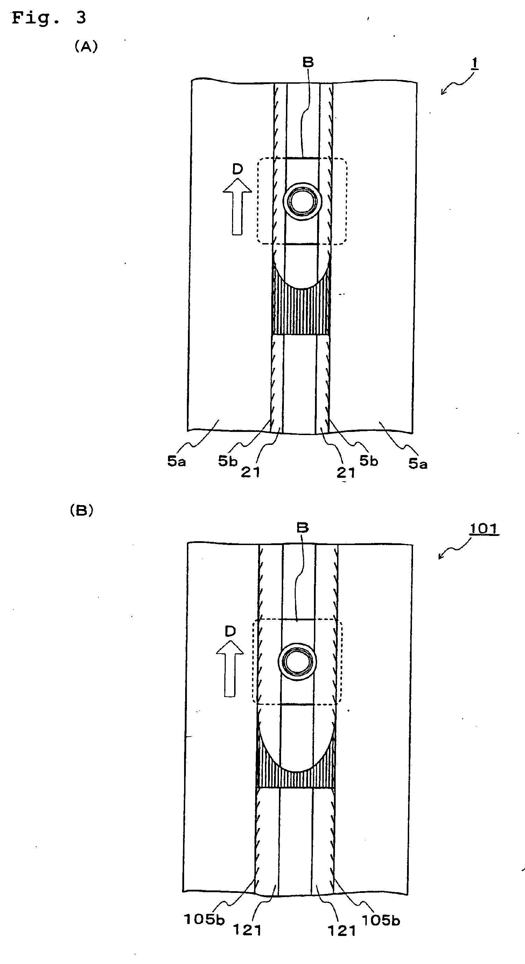

Now, referring to Figs. 3 and 4, an operation of the bottle conveying apparatus of the present invention will be described in comparison to the bottle conveying apparatus 101 of the related art. Fig. 3 shows a condition where a single bottle B is being conveyed along and on the conveying rails 21, 121. Specifically, Fig. 3(A) shows a part of the conveying apparatus 1 according to the illustrated embodiment of the present invention, while Fig. 3(B) shows a part of the conveying apparatus 101 of the related art. In each of the drawings, a graphical shape presented below the bottle B is a graphical representation of dynamical pressure distribution indicating a relationship between a position in the width direction of the air transport channel 11 and an air pressure at that position. It is herein assumed that the pressure within the air-filled chamber 3 is substantially equal between the illustrated embodiment and the related art case.

As obviously seen from the graphical representation of the dynamical pressure distribution in each of the drawings, values of the dynamical pressure in the bottle conveying apparatus 1 according to the illustrated embodiment in comparison to those for the related art apparatus show no variance near the side walls 5b but higher at respective positions along the width direction of the air transport channel 11, because the distance between the side walls 5b is shorter as compared to that in the related art apparatus. As noticed, the higher values of the dynamical pressure at respective positions along the width direction of the air transport channel 11 implies that the apparatus of the present invention allows such correspondingly great aerodynamic conveying force to impart on the neck N of the bottle B. In other words, this means that even if the air pressure is lowered (the pressure within the air-filled chamber is decreased) in comparison to the related art case, the aerodynamic force equivalent to that by the related art apparatus can be applied to the bottle B. This may consequently reduce an amount of energy to be consumed in generation of the compressed air.

Fig. 4 is a view illustrating schematically the aerodynamic force applied to the bottle B being conveyed. Turning now to Fig. 4, Figs. 4(A) and 4(B) represent the bottle conveying apparatus 1 according to the illustrated embodiment, while Figs. 4(C) and 4(D) represent the bottle conveying apparatus 101 of the related art. Specifically, Figs. 4(A) and 4(C) each show a condition where a plurality of bottles B is being conveyed in a train, while Figs. 4(B) and 4(D) show a condition where a single bottle B is being conveyed.

As shown in Fig. 4(A), in the bottle conveying apparatus 1 according to the illustrated embodiment, the air injection ports 7 are arranged in close proximity to (in lateral sides relative to) the neck N of the bottle B. This arrangement allows a blow of air from each air injection port 7 to impinge directly on every one of the bottles B, so that the force for conveyance can be applied to the bottle B efficiently. In other words, every single bottle B is subject to a blow of air from any one of the air injection ports 7 positioned in proximity to the bottle B for conveyance without any effect from other bottles B being conveyed ahead and/or behind thereof. This implies that only a volume of blowing air sufficient to apply a force required to convey any nearby single bottle B should be provided by every one of the air injection ports 7. Especially, in the illustrated embodiment, a spacing between any adjacent air injection ports 7 is designed to be narrower than that between the bottles B being conveyed. In the example as illustrated in Fig. 4, the volume of blowing air required to convey the single bottle B should be provided by three to four of the air injection ports 7.

Further, in Fig, 4(B), the bottle B is conveyed by a blow of air from the air injection ports 7 positioned in proximity to (in lateral sides relative to) the bottle B and subject to little aerodynamic effect from the rest of the air injection ports 7. Accordingly, the decrease in the conveying speed of the bottle B in the case as illustrated in Fig. 4(A) relative to that in the case as illustrated in Fig. 4(B) can be mitigated. This is because a large part of a force for conveying the bottle B in the volume of air blown out of the air injection port 7 can be consumed to push against the neck of the bottle B, allowing the aerodynamic force applied to the respective bottles being conveyed in a train to be more uniform.

Thus, according to the illustrated embodiment, the decrease in the conveying speed of the bottle B for the case where a plurality of bottles B is conveyed as they are proximal to each other, which has been the difficulty in conjunction with the related art technique, can be mitigated. In addition, for the rearmost bottle B subject to a relatively significant conveying force, even in the event that such a bottle B gets stuck on the conveying rails 21, the bottle B that once got stuck on the conveying rails 21 and now can start to move again should be able to bump against a bottle B being conveyed ahead of it with a little speed difference therebetween and thus the bottle(s) B should tend not to get damaged easily.

In contrast to that, such an effect as described above could not be obtained with the bottle conveying apparatus 101 of the related art as shown in Figs. 4(C) and 4(D). The reason for that is as follows. For example, if the four of the bottles B are conveyed in a train as shown in Fig. 4(C), a rearmost bottle B is applied with the aerodynamic force right behind thereof. However, those bottles B being conveyed ahead of the rearmost bottle B is hardly applied with the aerodynamic force from the right behind thereof. This is because each one of the bottle B is subject to the aerodynamic force that will be interrupted by the bottle B positioned behind thereof, meaning that any of the bottles B in the train except the rearmost bottle B would not be subject to the impingement of the blowing air efficiently. Due to this, if the volume of blowing air from the air injection ports 107 is small, it will be occasionally impossible to convey a series of bottles B. To avoid that, the bottle conveying apparatus 101 of the related art must inject a larger volume of blowing air than that required to convey a single bottle B. To illustrate this point of consideration schematically, the air blown out of the air injection ports 7 is indicated by the elongated arrows in Figs. 4(C) and 4(D). From such a condition as stated above, a relatively large aerodynamic force tends to apply to the rearmost bottle B.

On the other hand, if a single bottle B is due to be conveyed from the condition that the bottle B has got stuck on, as shown in Fig. 4(D), the large volume of blowing air as described above will create a greater force than required for the single bottle B. When the bottle B becomes free from the stuck on under the condition above, the bottle B is due to be conveyed with a greater aerodynamic force, and thus the conveying speed during this event should be higher than that during a plurality of bottles B being conveyed. This may end up with the bottle B being conveyed behind crashing into the bottle B being conveyed ahead with a large difference of conveying speed. This may give damage to the crashing bottle B, such as deformation or white-crazing of the bottle B.

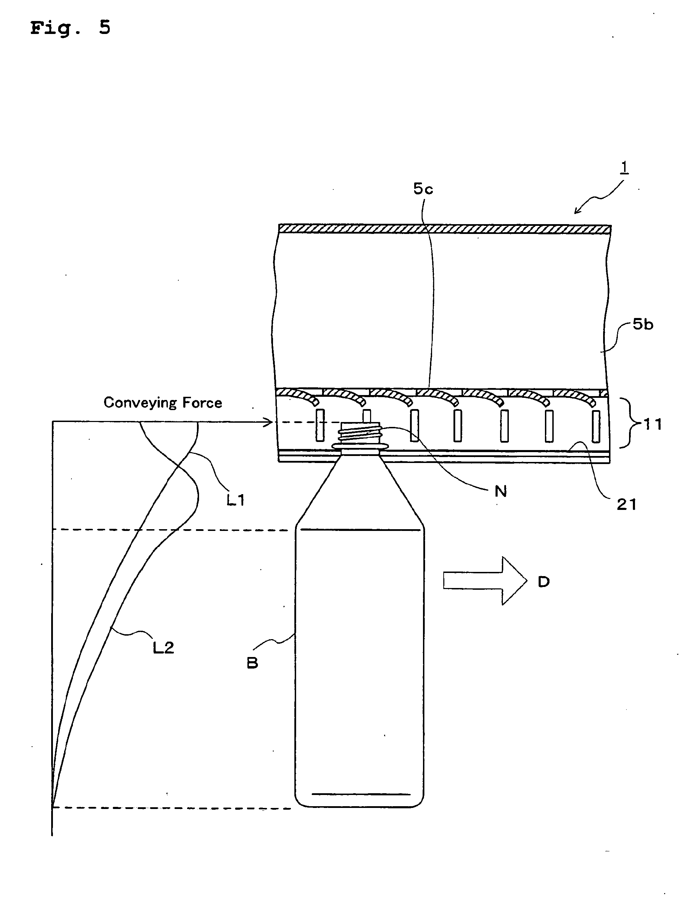

Referring to Fig. 5, there is shown a schematic diagram of a conveying force distribution indicating an aerodynamic conveying force of a bottle at respective levels in the vertical direction. In this schematic diagram, the conveying force distribution generated by the bottle conveying apparatus 1 according to the illustrated embodiment is represented by a curve L1, while the conveying force distribution generated by the bottle conveying apparatus 101 of the related art is represented by a curve L2. As obviously seen from those curves L1 and L2, the conveying force within the air transport channel 11 is higher in the L1. This is because the width of the air transport channel 11 has been reduced. This arrangement allows the air injection ports 7 to be positioned in proximity to the neck N of the bottle B and the aerodynamic conveying force for the bottle to be imparted sufficiently to the neck N of the bottle B, so that the decrease in the conveying speed of the bottle B in the case where a plurality of bottles B is conveyed as they are proximal to each other can be mitigated. It is possible from the same principle to further mitigate the decrease in the conveying speed of the bottle B by arranging the top ceiling 5c at a lower level so as to place the air injection ports 7c in close proximity to the neck N.

In addition, the present invention is intended to provide a method for conveying a bottle by using the bottle conveying apparatus as described above. Specifically, a blow of air can impinge on the neck N efficiently by blowing a volume of air out of the air injection ports 7 arranged in proximity to the neck N of the bottle B toward the conveying direction D of the bottle B, and with the aid of this aerodynamic conveying force, the bottle B can be conveyed along the conveying rails 21. During this, although the pressure of the air after having impinged on the neck N decreases, the blowing air can go down through the gap between respective conveying rails 21, with a part of the blowing air impinging on a lower area of the bottle B to impart the force for the bottle B to be conveyed.

As described above, the present invention allows the aerodynamic conveying force applied to each of the bottles being conveyed in a train to be more uniform and thus the decrease in the conveying speed of the bottle to be mitigated as compared to the apparatus of the related art. The present invention further makes it difficult for the bottles to get damaged due to the crashing of one bottle into another, which has been a difficulty in conjunction with the bottle conveying apparatus of the related art. In addition, the present invention can reduce the energy consumption in generation of the compressed air.

The present invention is applicable to a bottle conveying apparatus and a bottle conveying method for conveying bottles as before they are filled up with a quantity of a beverage and the like.

## Claims

1. A bottle conveying apparatus **characterized in that** the apparatus comprises:
a pair of conveying rails (21) disposed adjacent to each other in both sides relative to a bottle (B) for carrying said bottle (B) at a flange (G) defined in a neck (N) of said bottle (B); and
at least one row of air injection ports (7) arranged serially along said conveying rails (21) and operable to blow a volume of air toward a conveying direction (D) of said bottle (B),
wherein said air injection ports are disposed adjacent to said neck of said bottle,
wherein said air injection ports are disposed laterally in both sides relative to a mouth (K) of said neck of said bottle, wherein a distance (W) between said air injection port and an outer perimeter of said mouth (K) measured in a direction orthogonal to said conveying direction (D) is greater than 0 mm but not exceeding 15mm, **characterized in that**
said neck of said bottle is positioned within an air transport channel (11) having a rectangular cross section formed by said conveying rails (21), side walls (5b) and top ceiling (5c) provided with said injection ports.

2. A bottle conveying apparatus in accordance with claim 1, **characterized in that** said air injection ports (7c) are disposed also above a mouth (K) of said neck (N), wherein a distance (H) between said air injection port and an upper end of said mouth (K) is greater than 0 mm but not exceeding 15 mm.

3. A bottle conveying apparatus in accordance with claim 1 or 2, **characterized in that** a spacing between adjacent air injection ports along said conveying direction (D) is smaller than a spacing between adjacent bottles during said bottle being conveyed in a train.

4. A bottle conveying method **characterized in that** the method comprising the steps of:
carrying a bottle (B) at a flange (G) defined in a neck (N) of said bottle on a pair of conveying rails (21) disposed adjacent to each other in both sides relative to said bottle; and
blowing a volume of air out of air injection ports (7) which are arranged serially along each one of said conveying rails and which are disposed adjacent to said neck (N) of said bottle (B), toward a conveying direction (D) of said bottle,
wherein said air is injected from said air injection ports disposed laterally in both sides relative to a mouth (K) of said neck (N) of said bottle, a distance (W) between said air injection port and an outer perimeter of said mouth (K) measured in a direction orthogonal to said conveying direction (D) is greater than 0 mm but not exceeding 15 mm, **characterized in that**
said neck of said bottle is positioned within an air transport channel (11) having a rectangular cross section formed by said conveying rails (21), side walls (5b) and ceiling (5c) provided with said injection ports.

5. A bottle conveying method in accordance with claim 4 **characterized in that** the method further comprising the steps of:
lowering a pressure of said blow of air by allowing said blow of air to impinge on said neck (N) of said bottle; and after that
delivering a part of said blow of air to a region below said neck (N) of said bottle.

## Patentansprüche

1. Flaschenfördervorrichtung, **dadurch gekennzeichnet, dass** die Vorrichtung aufweist:
ein Paar Förderschienen (21), die benachbart zueinander auf beiden Seiten relativ zu einer Flasche (B) angeordnet sind, um die Flasche (B) an einem Flansch (G), der in einem Hals (N) der Flasche (B) definiert ist, zu befördern; und
wenigstens eine Reihe mit Lufteinspritzkanälen (7), die seriell entlang der Förderschienen (21) angeordnet sind und betriebsfähig sind, um ein Volumen von Luft in Richtung einer Förderrichtung (D) der Flasche (B) zu blasen,
wobei die Einspritzkanäle benachbart zu dem Hals der Flasche angeordnet sind,
wobei die Einspritzkanäle seitlich auf beiden Seiten relativ zu einer Mündung (K) des Halses der Flasche angeordnet sind, wobei ein Abstand (W) zwischen dem Lufteinspritzkanal und einem Außendurchmesser der Mündung (K) in einer Richtung orthogonal zu der Förderrichtung (D) gemessen größer als 0 mm ist, aber 15 mm nicht überschreitet, **dadurch gekennzeichnet, dass**
der Hals der Flasche innerhalb eines Lufttransportkanals (11) mit einem rechteckigen Querschnitt positioniert ist, der durch die Förderschienen (21), Seitenwände (5b) und eine obere Decke (5c), die mit den Einspritzkanälen bereitgestellt sind, ausgebildet ist.

2. Flaschenfördervorrichtung nach Anspruch 1, **dadurch gekennzeichnet, dass** die Lufteinspritzkanäle (7c) auch oberhalb einer Mündung (K) des Halses (N) angeordnet sind, wobei ein Abstand (H) zwischen der Lufteinspritzöffnung und einem oberen Ende der Mündung (K) größer als 0 mm ist, aber 15 mm nicht überschreitet.

3. Flaschenfördervorrichtung nach Anspruch 1 oder 2, **dadurch gekennzeichnet, dass** ein Zwischenraum zwischen benachbarten Lufteinspritzkanälen entlang der Förderrichtung (D) kleiner als ein Zwischenraum zwischen benachbarten Flaschen ist, während sie in einem Zug befördert werden.

4. Flaschenförderverfahren, **dadurch gekennzeichnet, dass** das Verfahren die Schritte aufweist:
Befördern einer Flasche (B) an einem Flansch (G), der in einem Hals (N) der Flasche definiert ist, auf einem Paar Förderschienen (21), die benachbart zueinander auf beiden Seiten relativ zu der Flasche angeordnet sind; und
Blasen eines Luftvolumens aus Lufteinspritzkanälen (7), die seriell entlang jeder der Förderschienen angeordnet sind und die benachbart zu dem Hals (N) der Flasche (B) angeordnet sind, in Richtung einer Förderrichtung (D) der Flasche,
wobei die Luft aus den Lufteinspritzkanälen eingespritzt wird, die seitlich auf beiden Seiten relativ zu einer Mündung (K) des Halses (N) der Flasche angeordnet sind, wobei ein Abstand (W) zwischen dem Einspritzkanal und einem Außendurchmesser der Mündung (K) in einer Richtung orthogonal zu der Förderrichtung (D) gemessen größer als 0 mm ist, aber 15 mm nicht überschreitet, **dadurch gekennzeichnet, dass**
der Hals der Flasche innerhalb eines Lufttransportkanals (11) mit einem rechteckigen Querschnitt positioniert ist, der durch die Förderschienen (21), Seitenwände (5b) und eine obere Decke (5c), die mit den Einspritzkanälen bereitgestellt sind, ausgebildet wird.

5. Flaschenförderverfahren nach Anspruch 4, **dadurch gekennzeichnet, dass** das Verfahren ferner die Schritte aufweist:
Senken eines Drucks der geblasenen Luft, indem zugelassen wird, dass die geblasene Luft auf dem Hals (N) der Flasche auftrifft; und danach,
Zuführen eines Teils der geblasenen Luft an eine Region unterhalb des Halses (N) der Flasche.

## Revendications

1. Appareil de transport de bouteille **caractérisé en ce que** l'appareil comprend :
une paire de rails de transport (21) disposés de manière adjacente l'un par rapport à l'autre, des deux côtés par rapport à une bouteille (B), pour porter ladite bouteille (B) au niveau d'un rebord (G) défini dans un goulot (N) de ladite bouteille (B) ; et
au moins une rangée d'orifices d'injection d'air (7) agencés en série le long desdits rails de transport (21) et pouvant fonctionner pour souffler un volume d'air vers une direction de transport (D) de ladite bouteille (B),
dans lequel lesdits orifices d'injection d'air sont disposés de manière adjacente audit goulot de ladite bouteille,
dans lequel lesdits orifices d'injection d'air sont disposés latéralement des deux côtés par rapport à une embouchure (K) dudit goulot de ladite bouteille, dans lequel une distance (W) entre ledit orifice d'injection d'air et un périmètre externe de ladite embouchure (K) mesurée dans une direction orthogonale à ladite direction de transport (D) est supérieure à 0 mm mais n'excédant pas 15 mm, **caractérisé en ce que** :
ledit goulot de ladite bouteille est positionné à l'intérieur d'un canal de déplacement d'air (11) ayant une section transversale rectangulaire formée par lesdits rails de transport (21), des parois latérales (5b) et un plafond supérieur (5c) équipé desdits orifices d'injection.

2. Appareil de transport de bouteille selon la revendication 1, **caractérisé en ce que** lesdits orifices d'injection d'air (7c) sont également disposés au-dessus d'une embouchure (K) dudit goulot (N), dans lequel une distance (H) entre ledit orifice d'injection d'air et une extrémité supérieure de ladite embouchure (K) est supérieure à 0 mm mais n'excédant pas 15 mm.

3. Appareil de transport de bouteille selon la revendication 1 ou 2, **caractérisé en ce qu'**un espacement entre des orifices d'injection d'air adjacents le long de ladite direction de transport (D) est inférieur à un espacement entre des bouteilles adjacentes pendant que ladite bouteille est transportée dans un train.

4. Procédé de transport de bouteille **caractérisé en ce que** le procédé comprend les étapes consistant à :
porter une bouteille (B) au niveau d'un rebord (G) défini dans un goulot (N) de ladite bouteille sur une paire de rails de transport (21) disposés de manière adjacente l'un par rapport à l'autre, des deux côtés par rapport à ladite bouteille ; et
souffler un volume d'air par des orifices d'injection d'air (7) qui sont agencés en série le long de chacun desdits rails de transport et qui sont disposés de manière adjacente audit goulot (N) de ladite bouteille (B), dans une direction de transport (D) de ladite bouteille,
dans lequel ledit air est injecté à partir desdits orifices d'injection d'air disposés latéralement des deux côtés par rapport à une embouchure (K) dudit goulot (N) de ladite bouteille, une distance (W) entre ledit orifice d'injection d'air et un périmètre extérieur de ladite embouchure (K) mesurée dans une direction orthogonale par rapport à ladite direction de transport (D) est supérieure à 0 mm mais n'excédant pas 15 mm, **caractérisé en ce que** :
ledit goulot de ladite bouteille est positionné à l'intérieur d'un canal de déplacement d'air (11) ayant une section transversale rectangulaire formée par lesdits rails de transport (21), des parois latérales (5b) et un plafond supérieur (5c) équipé desdits orifices d'injection.

5. Procédé de transport de bouteille selon la revendication 4, **caractérisé en ce que** le procédé comprend en outre les étapes consistant à :
abaisser une pression dudit jet d'air en permettant audit jet d'air de heurter ledit goulot (N) de ladite bouteille ; et après cela :
délivrer une partie dudit jet d'air dans une région située au-dessous dudit goulot (N) de ladite bouteille.
